# EUROPÄISCHE PATENTSCHRIFT

(11) **EP 2 960 145 B1**
(45) Veröffentlichungstag und Bekanntmachung des Hinweises auf die Patenterteilung: **05.08.2020**
(21) Anmeldenummer: 15173663.4
(22) Anmeldetag: 24.06.2015
(51) Int. Cl.: B62K 25/16, B62K 25/20, B62K 25/04

(54) **FAHRRADRAHMEN**
BICYCLE FRAME
CADRE DE VELO

(30) Priorität: 28.06.2014 DE 202014005311 U; 26.08.2014 DE 202014006805 U
(43) Veröffentlichungstag der Anmeldung: 30.12.2015
(73) Patentinhaber: Canyon Bicycles GmbH, 56073 Koblenz (DE)
(72) Erfinder: Wegerle, Sebastian, 56182 Urbar (DE); Zeindl, Benedikt, 94508 Schöllnach (DE)
(74) Vertreter: dompatent von Kreisler Selting Werner - Partnerschaft von Patent- und Rechtsanwälten mbB

(56) Entgegenhaltungen:
- WO-A1-92/02403
- WO-A1-94/06672
- WO-A1-98/56645
- WO-A1-2008/063140
- WO-A1-2015/051472
- AT-B- 33 387
- CH-A- 183 364
- CH-A- 256 749
- CN-Y- 2 173 741
- CN-Y- 2 348 180
- DE-C- 415 153
- DE-C- 801 884
- DE-C- 932 231
- DE-U1- 20 301 629
- DE-U1- 29 508 391
- FR-A- 356 675
- FR-A- 524 564
- FR-A- 551 570
- FR-A- 561 394
- FR-A- 564 025
- FR-A- 940 392
- FR-A- 998 215
- FR-A- 1 066 628
- GB-A- 159 669
- GB-A- 191 418 770
- NL-C2- 1 011 355
- US-A- 801 741
- US-A- 974 365

## Beschreibung

Die Erfindung betrifft einen Fahrradrahmen.

Bei Mountainbikes und Trekkingrädern ist ein gefederter Hinterbau bekannt. Der Hinterbau umfasst üblicherweise zwei im Bereich der Tretlageraufnahme mit einem Hauptrahmenelement verbundene Kettenstreben und zwei Sattelstreben. Die Sattelstreben sind mittelbar oder unmittelbar mit den nach hinten weisenden Enden der Kettenstreben verbunden. In diesem Bereich ist auch das Ausfallende ausgebildet, das die Hinterradnabe trägt. Die Sattelstreben führen üblicherweise vom Ausfallende schräg nach oben in Richtung des Sattelstützrohrs und sind beispielsweise über eine Wippe oder dergleichen mit dem Sattelstützrohr verbunden. Die Federung des Hinterbaus erfolgt sodann über ein Feder-Dämpfungselement mit linearem Dämpfer und gegebenenfalls einer Spiralfeder. Dieses Feder-Dämpfungselement ist zwischen dem Hinterbau und dem Hauptrahmenelement angeordnet. Das Hauptrahmelement umfasst üblicherweise ein Oberrohr, ein Unterrohr und ein Sattelstützrohr. Derartige gefederte Hinterbauten sind aufgrund des hohen Gewichts für Rennräder nicht geeignet.

Ein Fahrradrahmen mit den Merkmalen des Oberbegriffs des Anspruchs 1 ist aus WO 92/02403 bekannt.

Aufgabe der Erfindung ist es, einen Fahrradrahmen für ein Rennrad, Triathlonräder oder dergleichen zu schaffen, der unter weiterhin geringem Rahmengewicht die Dämpfungseigenschaften des Hinterbaus verbessert.

Die Lösung der Aufgabe erfolgt erfindungsgemäß durch die Merkmale des Anspruchs 1.

Die Erfindung betrifft einen Fahrradrahmen. Dieser weist ein Hauptrahmenelement mit insbesondere einem Oberrohr, einem Unterrohr und einem Sattelstützrohr auf. Das Hauptrahmenelement ist mit einem Hinterbau verbunden, der zur Aufnahme einer Hinterradnabe bzw. Hinterradachse dient. Bei dem Fahrradrahmen handelt es sich insbesondere um einen Fahrradrahmen für Rennräder und Triathlonräder, die entsprechend leicht ausgebildet sind. Erfindungsgemäß ist dennoch zwischen dem Hinterbau und dem Hauptrahmenelement mindestens ein Federelement angeordnet. Hierdurch kann der Fahrkomfort deutlich verbessert werden. Bei dem Federelement handelt es sich erfindungsgemäß um eine insbesondere gekrümmt ausgebildete Blattfeder.

In besonders bevorzugter Ausführungsform ist ein erstes Ende der Blattfeder mit einem Sattelstützrohr des Hauptrahmenelements verbunden. Die Verbindung erfolgt hierbei insbesondere mit einer Rückseite des Sattelstützrohrs, d. h. einer in Fahrtrichtung nach hinten weisenden Seite des Sattelstützrohrs. Vorzugsweise ist ein zweites Ende der Blattfeder mit einer Sattelstrebe des Hinterbaus verbunden. Hierbei kann eine unmittelbare Verbindung zwischen dem zweiten Ende der Blattfeder und einer der vorzugsweise zwei Sattelstreben vorgesehen sein. Sofern zwei Sattelstreben vorgesehen sind, ist es bevorzugt, dass diese über ein Verbindungselement miteinander verbunden sind, so dass die beiden Sattelstreben zusammen mit dem Verbindungselement insbesondere einen U-förmigen Querschnitt aufweisen. Es ist bei dieser Ausführungsform bevorzugt, dass das zweite Ende der Blattfeder mit dem Verbindungselement verbunden ist. Insofern ist eine mittige zentrale Verbindung möglich. Insbesondere erfolgt die Verbindung des zweiten Endes der Blattfeder mit dem Verbindungselement in einem in Fahrtrichtung hinter dem Sattelstützrohr angeordneten Bereich des Verbindungselements.

Anstelle der Verbindung des zweiten Endes der Blattfeder mit einer oder beiden Sattelstreben oder dem Verbindungselement der Sattelstreben kann die mindestens eine Blattfeder auch mit einer oder beiden Kettenstreben verbunden sein. Hierbei ist es insbesondere möglich, dass zwei Blattfedern vorgesehen sind, oder eine Blattfeder Y-förmig ausgebildet ist, so dass die beiden Arme jeweils ein zweites Ende ausbilden, das jeweils mit einer der beiden Kettenstreben verbunden ist.

Bei einer bevorzugten Weiterbildung des erfindungsgemäß gefederten Fahrradrahmens ist der Hinterbau mit dem Hauptrahmenelement über mindestens ein Gelenk, insbesondere ein Schwenkgelenk verbunden. Dieses Gelenk ist in bevorzugter Ausführungsform in das Sattelstützrohr integriert oder mit diesem verbunden. Hierbei kann das Gelenk eine Verbindung zwischen der mindestens einen Sattelstrebe bzw. dem Verbindungselement und dem Hauptrahmenelement oder auch eine Verbindung zwischen der mindestens einen Kettenstrebe und dem Hauptrahmenelement darstellen.

Des Weiteren ist es bevorzugt, dass zwischen der mindestens einen Sattelstrebe, beiden Sattelstreben oder dem Verbindungselement ein Übertragungselement vorgesehen ist, das die Verbindung zum Gelenk darstellt. Besonders bevorzugt ist es, dass das Übertragungselement durch eine Öffnung in das Sattelstützrohr geführt ist und sodann innerhalb des Sattelstützrohrs mit dem Gelenk verbunden ist. Hierbei ist das Übertragungselement vorzugsweise abgewinkelt bzw. gekrümmt ausgebildet und verläuft vorzugsweise teilweise innerhalb des Sattelstützrohrs. Ein entsprechendes Übertragungselement kann selbstverständlich auch mit einer oder beiden Kettenstreben oder einem die beiden Kettenstreben verbindenden Verbindungselement verbunden sein.

Des Weiteren ist es möglich, dass die vorstehend beschriebenen Ausführungsformen betreffend die Federung des Hinterbaus über eine mit der mindestens einen Sattelstrebe oder mit der mindestens einen Kettenstreben verbundenen Blattfedern miteinander kombiniert werden.

Insbesondere bei der Ausgestaltung der Rahmenelemente wie der Sattelstreben und der Kettenstreben aus einem Faserverbundwerkstoff wie Kohlefaser ist es nicht erforderlich, dass zusätzlich zu dem im Bereich der Blattfeder angeordneten Gelenk ein weiteres Gelenk vorgesehen ist, da die Streben eine ausreichende Flexibilität aufweisen. Erfolgt beispielsweise eine Anbindung der Sattelstreben über eine Blattfeder und ein Gelenk an dem Sattelstützrohr, so können die Kettenstreben fest bzw. einstückig mit dem Hauptrahmenelement verbunden bzw. ausgebildet sein.

Die Blattfeder ist vorzugsweise in Richtung des Sattelstützrohrs gekrümmt, wobei insbesondere eine Krümmung in Richtung des Gelenks erfolgt, sofern dieses vorgesehen ist. Ferner weist diese Ausführungsform vorzugsweise eine Federanlagefläche auf. Diese ist in bevorzugter Ausführungsform durch eine in Fahrtrichtung nach hinten weisende Rückseite des Sattelstützrohrs ausgebildet.

Die Federcharakteristik der Blattfeder kann eingestellt werden. Dies ist durch ein Verbinden der Blattfeder in unterschiedlichen Positionen mit dem Sattelstützrohr, der mindestens einen Sattelstrebe, der mindestens einen Kettenstrebe und/ oder dem entsprechenden Verbindungselement möglich. Hierzu können unterschiedliche Aufnahmen zur Fixierung mindestens eines der beiden Enden der Blattfeder in unterschiedlichen Positionen vorgesehen sein. Ebenso ist es möglich, eine oder mehrere Schellen vorzusehen, wobei die Schelle die mindestens eine Sattelstrebe, die mindestens eine Kettenstrebe und/ oder das entsprechende Verbindungselement zumindest teilweise umschließt.

Die erfindungsgemäße Federung des Hinterbaus bewirkt in bevorzugter Ausführungsform einen Federweg von 5 bis 20 mm, insbesondere 7 bis 15 mm.

Nachfolgend wird die Erfindung anhand einer bevorzugten Ausführungsform unter Bezugnahme auf die anliegenden Zeichnungen näher erläutert.

Es zeigen:
- Figur 1: eine schematische perspektivische Ansicht eines Teils eines gedämpften Hinterbaus eines Renn- oder Triathlonrades und
- Figur 2: eine schematische Detailansicht des in Figur 1 dargestellten Schwenkgelenks.

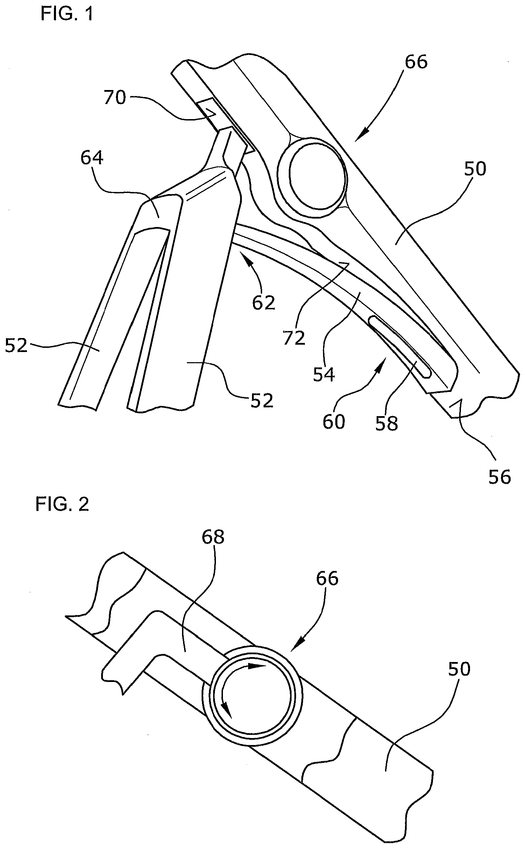

Figur 1 zeigt ein Sattelstützrohr 50 eines Hauptrahmenelements. Das Sattelstützrohr ist üblicherweise mit einem Oberrohr sowie gegebenenfalls über eine Tretlageraufnahme mit einem Unterrohr verbunden. Zwei Sattelstreben 52 bilden einen Teil eines Hinterbaus. Die Sattelstreben 52 sind üblicherweise im Bereich von Ausfallenden mit Kettenstreben verbunden. Die Ausfallenden dienen zur Aufnahme der Hinterradnabe bzw. Hinterradachse. Die Kettenstreben sind sodann gelenkig oder fest mit dem Hauptrahmenelement, insbesondere im Bereich der Tretlageraufnahme verbunden.

Erfindungsgemäß ist eine insbesondere gekrümmte Blattfeder 54 vorgesehen. Die Blattfeder 54 ist mit einer Rückseite 56 des Sattelstützrohrs 50 fest verbunden. Die Verbindung erfolgt hierbei beispielsweise durch eine Schraubverbindung, wobei die exakte Lage der Schraube in einem Schlitz 58 variierbar ist. Hierdurch ist die wirksame Länge der Blattfeder auf einfache Weise veränderbar. Ein erstes Ende 60 der Blattfeder 58 ist somit in der dargestellten Ausführungsform variierbar mit dem Sattelstützrohr 50 verbunden.

Ein zweites Ende 62 der Blattfeder 54 ist im dargestellten Ausführungsbeispiel mittelbar mit den beiden Sattelstreben 52 verbunden. Die beispielsweise ebenfalls durch Verschrauben hergestellte Verbindung erfolgt an einem die beiden Sattelstreben 52 miteinander verbindenden Verbindungselement 64. Das zweite Ende 62 der Blattfeder 54 kann hierbei auch über einen Schlitz verfügen, so dass die Fixierung in unterschiedlichen Stellungen möglich ist.

In bevorzugter Weiterbildung der Erfindung ist zusätzlich ein Gelenk 66 vorgesehen, bei dem es sich insbesondere um ein Schwenkgelenk handelt. Das Gelenk 66 ist in das Sattelstützrohr 50 integriert. Das Gelenk 66 ist einerseits mit dem Sattelstützrohr 50 und andererseits mittelbar mit den Sattelstreben 52 verbunden. Zur Verbindung des Gelenks 66 mit den Sattelstreben 52 ist ein Übertragungselement 68 vorgesehen, das mit dem Verbindungselement 64 verbunden und insbesondere einstückig ausgebildet ist. Das Übertragungselement 68 ist hierbei vorzugsweise abgewinkelt oder gekrümmt ausgebildet und durch eine Öffnung 70 an der Rückseite 56 des Sattelstützrohrs 50 geführt. Die Öffnung 70 ist hierbei vorzugsweise mit einem Kunststoffelement dichtend verschlossen. Ein Teil des Übertragungselements 68 verläuft somit innerhalb des Sattelstützrohrs 50.

Die Rückseite 56 des Sattelstützrohrs 50 ist in einem Bereich oberhalb des ersten Endes 60 der Blattfeder 54 (Figur 1) derart ausgebildet, dass hierdurch eine Federanlagefläche 72 ausgebildet ist.

## Patentansprüche

1. Fahrradrahmen mit
einem Hauptrahmenelement,
einem Hinterbau zur Aufnahme einer Hinterradnabe,
mindestens einem zwischen dem Hinterbau und dem Hauptrahmenelement angeordneten Federelement, wobei das mindestens eine Federelement eine insbesondere gekrümmte Blattfeder (54) aufweist, und
einem zwischen dem Hinterbau und dem Hauptrahmenelement angeordneten Gelenk (66), das in ein Sattelstützrohr (50) des Hauptrahmenelements integriert ist,
wobei zwischen mindestens einer Sattelstrebe (52) des Hinterbaus und dem Gelenk (66) ein Übertragungselement (68) vorgesehen ist,
**dadurch gekennzeichnet, dass**
der Fahrradrahmen ferner mindestens eine Kettenstrebe aufweist, die fest bzw. einstückig mit dem Hauptrahmenelement verbunden bzw. ausgebildet sind.

2. Fahrradrahmen nach Anspruch 1, **dadurch gekennzeichnet, dass** ein erstes Ende (60) der Blattfeder (54) mit dem Sattelstützrohr (50) des Hauptrahmenelements, insbesondere einer Rückseite (56) des Sattelstützrohrs (50) verbunden ist.

3. Fahrradrahmen nach Anspruch 2, **dadurch gekennzeichnet, dass** ein zweites Ende (62) der Blattfeder (54) mit der mindestens einen Sattelstrebe (52) des Hinterbaus insbesondere einem zwei Sattelstreben (52) verbindenden Verbindungselement (64) verbunden ist.

4. Fahrradrahmen nach einem der Ansprüche 1 - 3, **dadurch gekennzeichnet, dass** das in das Sattelstützrohr (50) integrierte Gelenk (66) ein Schwenkgelenk ist.

5. Fahrradrahmen nach einem der Ansprüche 1 - 4, **dadurch gekennzeichnet, dass** das Übertragungselement (68) durch eine Öffnung (70) in das Sattelstützrohr (50) geführt ist.

6. Fahrradrahmen nach einem der Ansprüche 1 - 5, **dadurch gekennzeichnet, dass** das Übertragungselement (68) abgewinkelt ist und vorzugsweise teilweise innerhalb des Sattelstützrohrs (50) verläuft.

7. Fahrradrahmen nach einem der Ansprüche 1 - 6, **gekennzeichnet durch** einen Federweg von 5 - 20 mm, insbesondere 7 - 15 mm.

8. Fahrradrahmen nach einem Ansprüche 1 - 7, **dadurch gekennzeichnet, dass** die Blattfeder einen Faserkunststoffverbund ausweist oder aus einem Faserkunststoffverbund hergestellt ist.

## Claims

1. Bicycle frame comprising
a main frame element,
a rear frame structure for receiving a rear wheel hub,
at least one spring element arranged between the rear frame structure and the main frame element, the at least one spring means comprising an in particular bent leaf spring (54) and
a hinge (66) arranged between the rear frame structure and the main frame element, said hinge being integrated into a seat tube (50) of the main frame element,
wherein a transmission element (68) is provided between at least one seat stay (52) of the rear frame structure and the hinge (66),
**characterized in that**
the bicycle frame further comprises at least one chain stay which is rigidly connected or integrally formed with the main frame element.

2. Bicycle frame of claim 1, **characterized in that** a first end (60) of the leaf spring (54) is connected to the seat tube (50) of the main frame element, in particular a rear side (56) of the seat tube (50).

3. Bicycle of claim 2, **characterized in that** a second end (62) of the leaf spring (54) is connected to the at least one seat stay (52) of the rear frame structure, in particular to a connection element (64) connecting two seat stays (52).

4. Bicycle of one of claims 1 - 3, **characterized in that** the hinge (66) integrated into the seat tube (50) is a pivot hinge.

5. Bicycle of one of claims 1 - 4, **characterized in that** the transmission element (68) is passed into the seat tube (50) through an opening (70).

6. Bicycle of one of claims 1 - 5, **characterized in that** the transmission element (68) is angled and preferably extends partly inside the seat tube (50).

7. Bicycle of one of claims 1 - 6, **characterized by** a spring travel of 5 - 29 mm, in particular 1 - 15 mm.

8. Bicycle of one of claims 1 - 7, **characterized in that** the leaf spring comprises a fiber-plastic composite is made of a fiber-plastic composite.

## Revendications

1. Cadre de bicyclette doté
d'un élément de cadre principal,
d'une structure arrière destinée à recevoir un moyeu de roue arrière,
d'au moins un élément de ressort agencé entre la structure arrière et l'élément de cadre principal, dans lequel l'au moins un élément de ressort comporte un ressort à lame (54) en particulier recourbé, et
d'au moins une articulation (66) agencée entre la structure arrière et l'élément de cadre principal, laquelle est intégrée dans un tube de support de selle (50) de l'élément de cadre principal,
dans lequel entre au moins un montant de selle (52) de la structure arrière et l'articulation (66) est prévu un élément de transmission (68),
**caractérisé en ce que**
le cadre de bicyclette comporte en outre au moins une base de chaîne, raccordée de manière fixe ou réalisée d'une pièce avec l'élément de cadre principal.

2. Cadre de bicyclette selon la revendication 1, **caractérisé en ce qu'**une première extrémité (60) du ressort à lame (54) est raccordée au tube de support de selle (50) de l'élément de cadre principal, en particulier à une face arrière (56) du tube de support de selle (50).

3. Cadre de bicyclette selon la revendication 2, **caractérisé en ce qu'**une deuxième extrémité (62) du ressort à lame (54) est raccordée à l'au moins un montant de selle (52) de la structure arrière, en particulier à un élément de raccordement (64) reliant deux montants de selle (52) .

4. Cadre de bicyclette selon l'une des revendications 1-3, **caractérisé en ce que** l'articulation (66) intégrée dans le tube de support de selle (50) est une articulation pivotante.

5. Cadre de bicyclette selon l'une des revendications 1-4, **caractérisé en ce que** l'élément de transmission (68) est guidé dans le tube de support de selle (50) à travers une ouverture (70).

6. Cadre de bicyclette selon l'une des revendications 1-5, **caractérisé en ce que** l'élément de transmission (68) est coudé et s'étend de préférence partiellement à l'intérieur du tube de support de selle (50).

7. Cadre de bicyclette selon l'une des revendications 1-6, **caractérisé par** un débattement de ressort de 5-20 mm, en particulier de 7-15 mm.

8. Cadre de bicyclette selon l'une des revendications 1-7, **caractérisé en ce que** le ressort à lame comporte un composite fibre/plastique ou est fabriqué en composite fibre/plastique.
